# EUROPÄISCHE PATENTSCHRIFT

(11) **EP 3 523 075 B1**
(45) Veröffentlichungstag und Bekanntmachung des Hinweises auf die Patenterteilung: **29.03.2023**
(21) Anmeldenummer: 16781082.9
(22) Anmeldetag: 05.10.2016
(51) Int. Cl.: B23D 45/06

(54) **TRANSPORTABLE BEARBEITUNGSEINHEIT**
TRANSPORTABLE PROCESSING UNIT
UNITÉ DE TRAITEMENT TRANSPORTABLE

(43) Veröffentlichungstag der Anmeldung: 14.08.2019
(73) Patentinhaber: Festool GmbH, 73240 Wendlingen (DE)
(72) Erfinder: ENDER, Dominic Richard, 72622 Nürtingen (DE)
(74) Vertreter: Patentanwälte Magenbauer & Kollegen Partnerschaft mbB
(86) Internationale Anmeldenummer: PCT/EP2016/073739
(87) Internationale Veröffentlichungsnummer: WO 2018/065040

(56) Entgegenhaltungen:
- JP-A- 2004 283 991
- US-A1- 2005 092 155
- US-A1- 2007 079 682
- US-A1- 2010 116 261
- US-A1- 2011 048 194
- US-A1- 2011 113 939
- Anonymous: "Catalogue The Felder Group", Felder Group , 1. Februar 2016 (2016-02-01), Seite 152, 159, XP002770029, Gefunden im Internet: URL:http://fms.felder-group.com/Kataloge/F G/Gesamtkatalog_2016/16FG-02-HC-EUK/ [gefunden am 2017-05-10]

## Beschreibung

### Die Erfindung betrifft eine transportable

Bearbeitungseinheit, insbesondere eine Tischkreissäge, mit einem Werkzeug zur Bearbeitung eines Werkstücks, umfassend eine auf einer Unterlage abstellbare kastenförmige Stützstruktur, die über eine zum Auflegen des zu bearbeitenden Werkstücks nutzbare Werkstück-Auflageplatte verfügt, sowie eine Steuereinrichtung mit einer außen an der Stützstruktur angeordneten Bedieneinrichtung.

Die DE 20 2004 009 123 U1 beschreibt eine Tischkreissäge mit einem Gehäuse, das umfangseitig und unterseitig mit im wesentlichen geschlossenen Außenflächen versehen ist. Das Gehäuse trägt eine Arbeitsplatte mit einer Auflagefläche. An der Vorderseite des Gehäuses ist eine Gehrungsvorrichtung und deren Bedienfront vorgesehen.

Die US 2011/048194 A1 beschreibt eine Tischsäge mit einem Basisgehäuse und einer Werkstück-Abstützfläche. Ein Gehrungsanpassungs-Drehrad kann verwendet werden, um den Winkel des Sägeblatts hinsichtlich der Werkstück-Abstützfläche zu bestimmen, durch ein Schwenken eines Rahmens innerhalb des Basisgehäuses. Die Position eines Schlittens entlang von Führungsschienen kann durch ein Sägeblatthöhen-Drehrad gesteuert werden, durch eine Getriebeanordnung und eine Höhenanpassungsstange.

Das Dokument "Catalogue the Felder Group" beschreibt eine Kreissäge-Fräsmaschine für professionelle Holzbearbeitung.

Die Sägeblatthöhe und die Winkeleinstellungen können mit dem Drehen eines Knaufs angepasst werden.

Die US 2010/116261 A1 beschreibt eine Kappsäge, die auf einem kastenförmigen Arbeitstisch angebracht ist. Der Arbeitstisch ist in ein oberes Gehäuse und einen unteren Staubbehälter unterteilt. Das obere Gehäuse verfügt über eine Lasche, mit der das Gehäuse an den unteren Staubbehälter gekoppelt ist. Die US 2007/079682 A1 beschreibt eine Kalibrierungsscheibe zur Verwendung mit Tischsägen. Eine andere Tischkreissäge wird in der US 2005/092155A1 offenbart.

Die JP 2004 283991 A beschreibt ein Elektrowerkzeug mit einem Detektor zur Detektion einer Position und/oder einem Zustand eines zu messenden Objekts.

Die US 2011/113939A1 offenbart ein Elektrowerkzeug welches über eine Steuereinheit mit Schnellwahltasten verfügt.

Eine Aufgabe der Erfindung besteht darin, die Bedienbarkeit einer transportablen Bearbeitungseinheit der eingangs genannten Art zu verbessern.

Diese Aufgabe wird mittels der im Anspruch 1 angegebenen Merkmale gelöst. Die Steuereinrichtung umfasst eine als Mikrocontroller ausgebildete Steuereinheit. Die Bedieneinrichtung ist an der Steuereinheit angeschlossen. Erfindungsgemäß umfasst die Bedieneinrichtung ein erstes Drehrad und ein zweites Drehrad, wobei über das erste Drehrad ein mit einem Betrieb des Werkzeugs in Verbindung stehender erster Betriebsparameter in die Steuereinrichtung eingebbar ist und über das zweite Drehrad ein mit dem Betrieb des Werkzeugs in Verbindung stehender zweiter Betriebsparameter in die Steuereinrichtung eingebbar ist. Die Drehräder jeweils einen Drehgeber umfassen, der der Steuereinheit ein elektrisches Signal gemäß einer Stellung und/oder einer Stellungsänderung des jeweiligen Drehrads bereitstellt. Die Bedieneinrichtung verfügt über mehrere Schnellwahltasten, wobei in der Steuereinrichtung jeweils eine feste Zuordnung zwischen den Schnellwahltasten und den Betriebsparametern definiert ist.

Erfindungsgemäß umfasst die Bedieneinrichtung demnach zwei Drehräder, wobei jedes Drehrad der Eingabe eines jeweiligen Betriebsparameters dient. Da für jeden der Betriebsparameter ein eigenes Drehrad vorgesehen ist, kann die Eingabe der Betriebsparameter schnell und einfach erfolgen. Insbesondere ist es dabei nicht notwendig, zunächst durch weitere Benutzereingaben, wie beispielsweise das Drücken von Konfigurationstasten etc., auszuwählen, welcher Betriebsparameter eingegeben werden soll. Stattdessen kann zur Eingabe eines Betriebsparameters einfach das dem einzugebenden Betriebsparameter zugeordnete Drehrad betätigt werden. Folglich wird die Bedienbarkeit der transportablen Bearbeitungseinheit erhöht.

Bei der Eingabe eines Betriebsparameters wird zweckmäßigerweise ein Wert für den entsprechenden Betriebsparameter eingegeben. Insbesondere wird der einzugebende Wert dabei über ein Drehen des zugeordneten Drehrads ausgewählt. Gemäß einer bevorzugten Ausgestaltung können die Drehräder als Drehdrücksteller ausgebildet sein. Ein ausgewählter Wert kann dann über Drücken des Drehrads bestätigt bzw. bei einem Drücken des Drehrads von der Steuereinrichtung übernommen werden.

Die eingebbaren Betriebsparameter stehen in Verbindung mit dem Betrieb des Werkzeugs. Beispielsweise dienen die eingebbaren Betriebsparameter dazu, die Stellung oder den Antrieb des Werkzeugs einzustellen. Vorzugsweise betreffen die Betriebsparameter eine Höhe oder einen Winkel des Werkzeugs relativ zur Auflageplatte. Ferner können die Betriebsparameter auch eine Drehzahl, ein Drehmoment und/oder einen Antriebsmodus einer das Werkzeug antreibenden Antriebseinrichtung betreffen.

Vorteilhafte Weiterbildungen sind Gegenstand der Unteransprüche.

Vorzugsweise ist in der Steuereinrichtung eine feste Zuordnung zwischen den Drehrädern und den Betriebsparametern definiert. Die feste Zuordnung zwischen den Drehrädern und den Betriebsparametern ermöglicht eine schnelle und intuitive Eingabe der Betriebsparameter. Insbesondere ist es dabei nicht möglich, den ersten Betriebsparameter mit einem anderen als dem ersten Drehrad einzugeben und/oder den zweiten Betriebsparameter mit einem anderen als dem zweiten Drehrad einzugeben.

Zweckmäßigerweise ist die Steuereinrichtung ausgebildet, bei Drücken einer der Schnellwahltasten den ersten oder zweiten Betriebsparameter auf einen vorbestimmten Wert zu setzen. Auf diese Weise können die Betriebsparameter sehr schnell und einfach auf vorbestimmte Werte gesetzt werden. Bei den vorbestimmten Werten handelt es sich beispielsweise um Werte, auf die die Betriebsparameter besonders häufig gesetzt werden.

In bevorzugter Ausgestaltung verfügt die Bedieneinrichtung über mehrere Schnellwahltasten, wobei in der Steuereinrichtung jeweils eine feste Zuordnung zwischen den Schnellwahltasten und den Betriebsparametern definiert ist. Insbesondere ist dabei wenigstens eine Schnellwahltaste dem ersten Betriebsparameter zugeordnet und wenigstens eine zweite Schnellwahltaste dem zweiten Betriebsparameter zugeordnet. Aufgrund der festen Zuordnung zwischen den Schnellwahltasten und den Betriebsparametern ist eine schnelle und intuitive Eingabe der Betriebsparameter möglich.

Gemäß einer bevorzugten Ausgestaltung sind die Drehräder und die Schnellwahltasten derart angeordnet, dass sich die dem ersten Betriebsparameter zugeordneten Schnellwahltasten und das erste Drehrad auf einer ersten Seite einer gedachten Trennlinie befinden und sich die dem zweiten Betriebsparameter zugeordneten Schnellwahltasten und das zweite Drehrad auf einer zweiten Seite der gedachten Trennlinie befinden. Die jeweils dem selben Betriebsparameter zugehörigen Bedienelemente sind folglich zueinander räumlich gruppiert angeordnet. Auf diese Weise kann schnell und intuitiv erkannt werden, welche Bedienelemente welchem Betriebsparameter zugehörig sind.

Gemäß einer weiteren Ausgestaltung umfasst die Steuereinrichtung eine elektrische Stelleinrichtung und ist ausgebildet, unter Verwendung der elektrischen Stelleinrichtung die Stellung des Werkzeugs relativ zur Werkstück-Auflageplatte gemäß dem ersten und/oder zweiten Betriebsparameter einzustellen. Demnach erfolgt die Positionierung des Werkzeugs mittels einer elektrischen Stelleinrichtung, beispielsweise einem elektrischen Linear- und/oder Schwenkantrieb. Die Positionierung des Werkzeugs kann auf diese Weise schnell und präzise eingestellt werden.

Vorzugsweise ist die elektrische Stelleinrichtung ausgebildet, das Werkzeug entlang einem ersten und einem zweiten Freiheitsgrad zu positionieren, und die Steuereinrichtung ist ausgebildet, unter Verwendung der elektrischen Stelleinrichtung die Stellung des Werkzeugs entlang dem ersten Freiheitsgrad gemäß dem ersten Betriebsparameter einzustellen und die Stellung des Werkzeugs entlang dem zweiten Freiheitsgrad gemäß dem zweiten Betriebsparameter einzustellen.

Beispielsweise ist die elektrische Stelleinrichtung ausgebildet, das Werkzeug entlang einer vertikalen Translationsachse zu verschieben und/oder um eine horizontale Schwenkachse zu verschwenken. Ist die transportable Bearbeitungseinheit als Tischkreissäge ausgebildet, so können über die Betriebsparameter beispielsweise Höhe und Gehrungswinkel des Sägeblatts eingestellt werden.

Vorzugsweise ist die Steuereinrichtung ausgebildet, den ersten und/oder zweiten Betriebsparameter bei Drücken einer Schnellwahltaste auf einen Wert zu setzten, der einer maximalen und/oder minimalen Verschiebung entlang einer vertikalen Translationsachse und/oder einer maximalen und/oder minimalen Verschwenkung um eine horizontale Schwenkachse entspricht. Mit einer minimalen Verschwenkung ist insbesondere auch eine betragsmäßig minimale Verschwenkung gemeint. In den meisten Fällen findet eine Bearbeitung des Werkstücks bei diesen Werten statt. Dadurch, dass mittels der Schnellwahltasten eine direkte Auswahl dieser Werte möglich ist, kann die transportable Bearbeitungseinheit in diesen Fällen schnell und komfortabel eingestellt werden.

Die Bedieneinrichtung ist insbesondere an einer Umfangswand der Stützstruktur angeordnet. Vorzugsweise sind die Drehachsen der Drehräder orthogonal zur Umfangswand ausgerichtet. Die Drehräder und die Schnellwahltasten sind vorzugsweise in einem Bedienfeld angeordnet. Die Drehräder sind insbesondere direkt nebeneinander angeordnet und befinden sich auf derselben Höhe. Zweckmäßigerweise sind auch die Schnellwahltasten nebeneinander angeordnet und befinden sich ebenfalls auf derselben Höhe. Vorzugsweise sind die Schnellwahltasten direkt unterhalb der Drehräder angeordnet.

Gemäß einer bevorzugten Ausgestaltung ist in der Umfangswand eine Vertiefung vorgesehen, in der die Bedieneinrichtung angeordnet ist. Vorzugsweise ragen die Bedienelemente der Bedieneinrichtung dabei nicht über die Umfangswand heraus, so dass die transportable Bearbeitungseinheit einen im Wesentlichen rechteckigen horizontalen Querschnitt aufweist. Auf diese Weise wird gewährleistet, dass die transportable Bearbeitungseinheit besonders gut verstaubar und transportierbar ist.

Gemäß einer bevorzugten Ausgestaltung weist die Stützstruktur Kopplungsmittel auf und ist ausgebildet, in einem Zustand, in dem die transportable Bearbeitungseinheit zusammen mit wenigstens einem kastenförmigen Körper einen vertikalen Stapel bildet, eine lösbare, vertikal zugfeste Kopplung mit dem wenigstens einen kastenförmigen Körper bereitzustellen, wobei die Kopplungsmittel zumindest teilweise in der Vertiefung angeordnet sind.

Zweckmäßigerweise umfasst die Bedieneinrichtung eine Anzeige, die ausgebildet ist, den ersten und/oder den zweiten Stellungsparameter anzuzeigen. Mit Hilfe der Anzeige kann der Benutzer beispielsweise darüber informiert werden, welcher Wert momentan durch ein Drehrad ausgewählt ist.

Die Anzeige ist vorzugsweise oberhalb der Drehräder an einer Umfangswand der Stützstruktur angeordnet und gegenüber der Umfangswand nach oben angewinkelt.

Eine derart angeordnete Anzeige kann im Betrieb, in dem ein Benutzer typischerweise von oben auf die transportable Bearbeitungseinheit hinabschaut, besonders gut abgelesen werden. Zudem fungiert eine derart angeordnete Anzeige gewissermaßen als Vordach für die Bedienelemente und schützt diese vor Verschmutzung und versehentlicher Betätigung von oben.

Gemäß einer weiteren Ausgestaltung umfasst eines der Drehräder einen Inkrementalgeber. Vorzugsweise umfasst jedes der Drehräder einen jeweiligen Inkrementalgeber.

Im Folgenden wird eine beispielhafte Ausführungsform unter Bezugnahme auf die Zeichnung erläutert. Dabei zeigt
- Figur 1: eine perspektivische Darstellung einer transportablen Bearbeitungseinheit,
- Figur 2: eine Frontansicht der transportablen Bearbeitungseinheit,
- Figur 3: ein schematischen Blockdiagramm einer Steuereinrichtung,
- Figur 4: eine transportable Bearbeitungseinheit in einem Stapel.

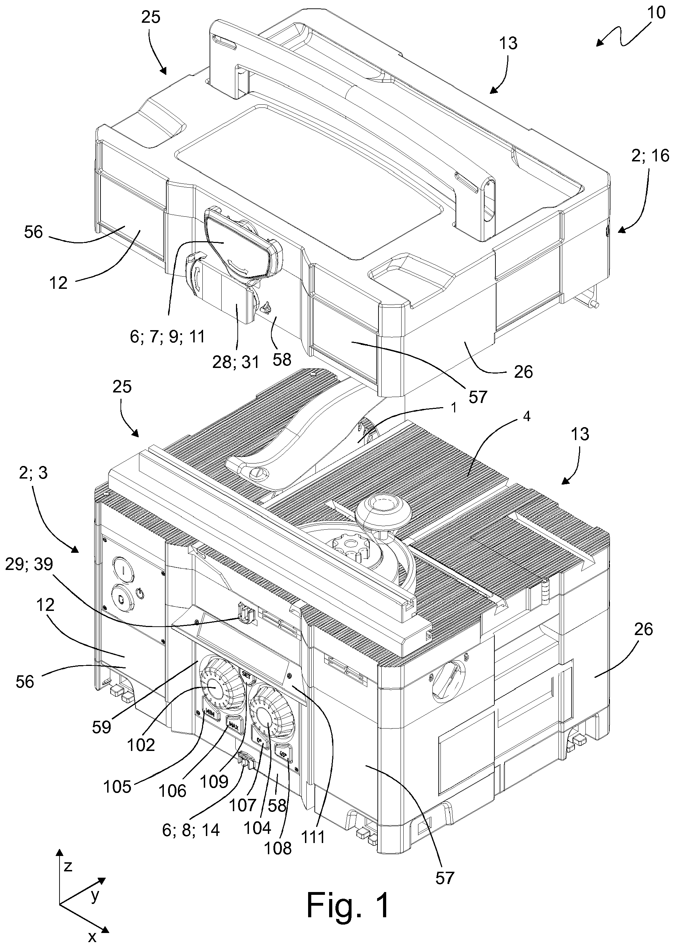

Die transportable Bearbeitungseinheit 10 erstreckt sich in eine Vertikalrichtung, die parallel zu der in der Figur 1 eingezeichneten z-Achse verläuft, in eine Längsrichtung, die parallel zu der in der Figur 1 eingezeichneten x-Achse verläuft, und in eine Querrichtung, die parallel zu der in der Figur 1 eingezeichneten y-Achse verläuft. Die x-Achse, y-Achse und z-Achse sind orthogonal zueinander ausgerichtet.

Die transportable Bearbeitungseinheit 10 ist in den gezeigten Figuren exemplarisch als Tischkreissäge ausgebildet. Alternativ dazu kann die transportable Bearbeitungseinheit 10 auch als eine andere Maschine, insbesondere eine andere halbstationäre Maschine, wie beispielsweise eine Oberfräse, Dekupiersäge oder ein Kantenschleifer, ausgebildet sein. Als halbstationäre Maschine soll in diesem Zusammenhang insbesondere eine Bearbeitungseinheit bezeichnet werden, die bei der Werkstückbearbeitung auf einer Unterlage abgestellt wird und die dazu geeignet ist, beim Transport von einer Person getragen zu werden.

Die transportable Bearbeitungseinheit 10 weist ein Werkzeug 1 auf, das der Bearbeitung eines Werkstücks dient. Bei der in den Figuren gezeigten Ausführungsform ist das Werkzeug 1 exemplarisch als Sägeblatt ausgebildet. Das Werkzeug 1 greift durch eine in der Werkstück-Auflageplatte 4 vorgesehene Öffnung hindurch.

Die transportable Bearbeitungseinheit 10 umfasst eine auf einer Unterlage abstellbare kastenförmige Stützstruktur 2, die über eine zum Auflegen des zu bearbeitenden Werkstücks nutzbare Werkstück-Auflageplatte 4 verfügt. Die kastenförmige Stützstruktur 2 weist eine im Wesentlichen quaderförmige Grundgestalt auf, bei der die Außenflächen, vorzugsweise sämtliche Außenflächen, im Wesentlichen geschlossen sind.

Bei dem gezeigten Ausführungsbeispiel verfügt die Stützstruktur 2 exemplarisch über ein Unterteil 3 und ein Oberteil 16. Das Unterteil 3 ist kastenförmig ausgebildet. Die zur Bearbeitung des Werkstücks benötigten funktionalen Einheiten sind am bzw. im Unterteil 3 vorgesehen, so dass das Unterteil 3 für sich genommen bereits eine transportable Bearbeitungseinheit darstellt. Das in der Form einer Abdeckhaube ausgebildete Oberteil 16 ist optional vorgesehen. Es dient, wie nachstehend noch im Detail erläutert, primär dazu, die transportable Bearbeitungseinheit 10 für den Transport in einem Stapel 20 unterzubringen.

Die Stützstruktur 2 weist vier orthogonal zueinander ausgerichtete Umfangswände auf. Die Umfangswände umfassen eine Vorderwand 12, eine Rückwand 13, sowie Seitenwände 25 und 26. Die Vorderwand 12 und die Rückwand 13 sind parallel zu der Längsrichtung ausgerichtet, und die Seitenwände 25, 26 sind parallel zu der Querrichtung ausgerichtet.

Die transportable Bearbeitungseinheit 10 umfasst eine Steuereinrichtung 101 mit einer außen an der Stützstruktur 2 angeordneten Bedieneinrichtung 59. Im gezeigten Beispiel ist die Bedieneinrichtung 59 an der Vorderwand 12 angeordnet. Alternativ dazu kann die Bedieneinrichtung 59 auch an einer der Seitenwände 25 und 26, oder an der Rückwand 13 angeordnet sein. Ferner ist es auch möglich, dass Bedienelemente der Bedieneinrichtung 59 über mehrere Umfangswände verteilt sind.

Die Bedieneinrichtung 59 umfasst ein erstes Drehrad 102 und ein zweites Drehrad 104. Über das erste Drehrad 102 ist ein mit einem Betrieb des Werkzeugs 1 in Verbindung stehender erster Betriebsparameter in die Steuereinrichtung 101 eingebbar. Über das zweite Drehrad 104 ist ein mit dem Betrieb des Werkzeugs 1 in Verbindung stehender zweiter Betriebsparameter in die Steuereinrichtung 101 eingebbar.

Folglich ist für jeden der Betriebsparameter ein eigenes Drehrad 102, 104 vorgesehen, so dass die Eingabe der Betriebsparameter schnell und einfach erfolgen kann.

Die eingebbaren Betriebsparameter dienen beispielsweise dazu, die Stellung oder den Antrieb des Werkzeugs einzustellen. Vorzugsweise betreffen die Betriebsparameter eine Höhe oder einen Winkel des Werkzeugs 1 relativ zur Werkstück-Auflageplatte 4. Ferner können die Betriebsparameter auch eine Drehzahl, ein Drehmoment und/oder einen Antriebsmodus einer das Werkzeug 1 antreibenden Antriebseinrichtung betreffen 5. Zweckmäßigerweise kann wenigstens einer der Betriebsparameter die Stellung und wenigstens ein anderer der Betriebsparameter den Antrieb des Werkzeugs betreffen.

Im gezeigten Beispiel verfügt die Bedieneinrichtung 59 über genau zwei Drehräder 102 und 104. Die Bedieneinrichtung 59 kann auch drei oder Mehr Drehräder aufweisen, je nachdem, wie viele Betriebsparameter direkt über ein eigenes Drehrad eingebbar sein sollen.

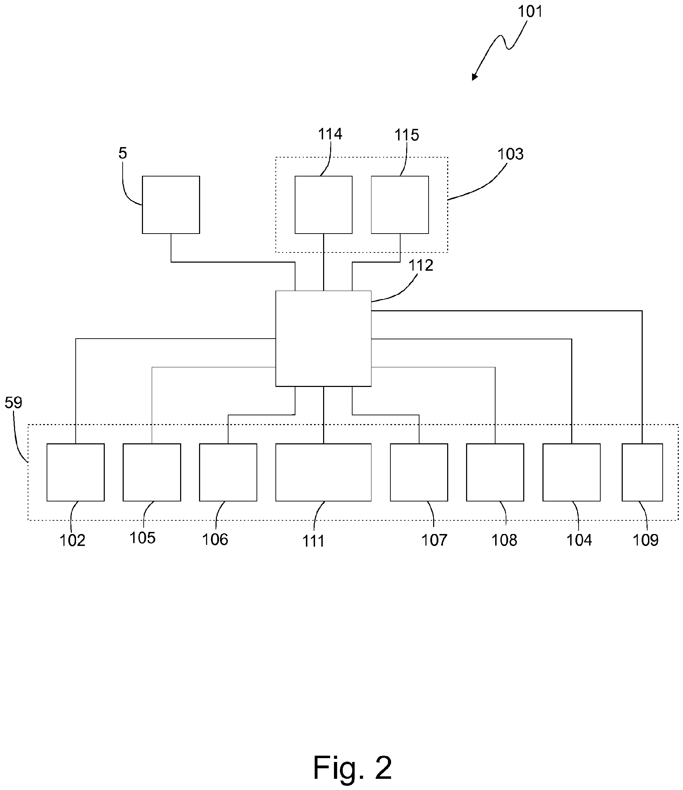

Die Figur 2 zeigt ein schematisches Blockdiagramm der Steuereinrichtung 101. Die Steuereinrichtung 101 umfasst die vorstehend diskutierte Bedieneinrichtung 59 sowie eine Steuereinheit 112, eine Antriebseinrichtung 5 und eine elektrische Stelleinrichtung 103.

Die Bedieneinrichtung 59 umfasst eine Vielzahl an Bedienelementen. Wie vorstehend bereits beschrieben, umfasst die Bedieneinrichtung 59 das erste Drehrad 102 und das zweite Drehrad 104. Darüber hinaus umfasst die Bedieneinrichtung 59 exemplarisch Schnellwahltasten 105, 106, 107 und 108, eine Kalibrationstaste 109 und eine Anzeige 111.

Die Steuereinheit 112 ist beispielsweise als Mikrocontroller ausgebildet. Die Bedieneinrichtung 59 bzw. deren Bedienelemente sind an die Steuereinheit 112 angeschlossen. Ferner sind exemplarisch auch die Antriebseinrichtung 5 und die elektrische Stelleinrichtung 103 an die Steuereinheit 112 angeschlossen.

Die elektrische Stelleinrichtung 103 umfasst exemplarisch einen Linearantrieb 114 und einen Schwenkantrieb 115, die ausgebildet sind, das Werkzeug 1 gemäß einer Ansteuerung durch die Steuereinheit 112 relativ zur Werkstück-Auflageplatte 4 zu positionieren.

Die Antriebseinrichtung 5 ist beispielsweise als Drehantrieb ausgebildet und dient dem maschinellen Antrieb des Werkzeugs 1. Die Antriebseinrichtung 5 ist an dem Unterteil 3 betriebsbereit befestigt, so dass die Antriebseinrichtung 5 bei der Bearbeitung des Werkstücks 1 durch das von der Antriebseinrichtung 5 angetriebene Werkzeug 1 im Unterteil 3 verbleibt.

Die Steuereinheit 112, die Antriebseinrichtung 5 und die elektrische Stelleinrichtung 103 sind exemplarisch im Innern der Stützstruktur 2 angeordnet und daher in den Figuren 1, 3 und 4 nicht zu sehen.

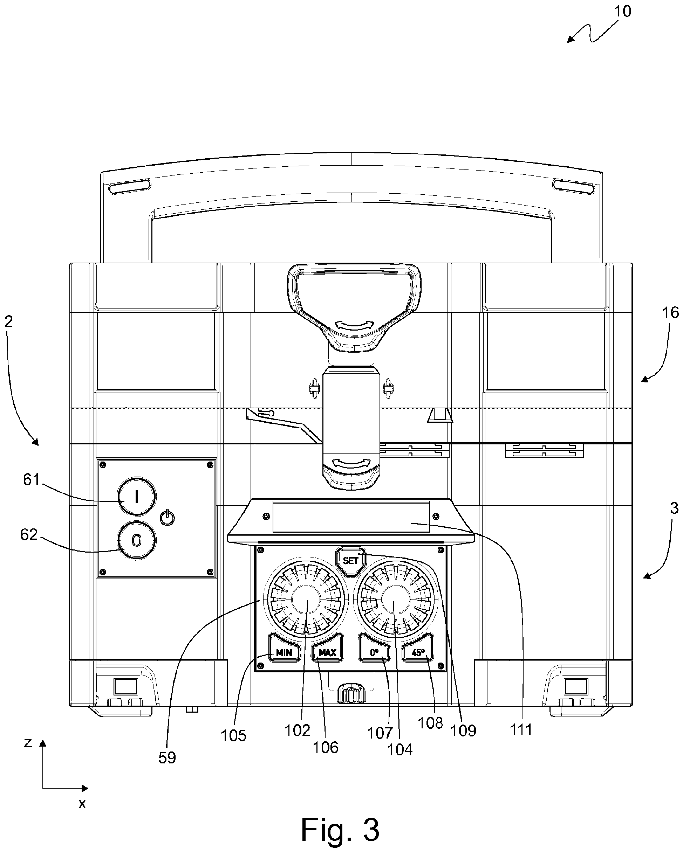

In der Figur 3 ist die Bedieneinrichtung 59 von vorne zu sehen. In dem gezeigten Ausführungsbeispiel sind die Drehräder 102, 104 und die Schnellwahltasten 105, 106, 107, 108 exemplarisch in einem Bedienfeld angeordnet. Die Drehräder 102, 104 sind insbesondere direkt nebeneinander angeordnet und befinden sich auf derselben Höhe bzw. im selben vertikalen Bereich. Die Mittelpunkte der Drehräder 102, 104 liegen auf einer gedachten horizontalen Geraden.

Direkt unterhalb der Drehräder 102, 104 sind die Schnellwahltasten 105, 106, 107, 108 angeordnet. Die Schnellwahltasten 105, 106, 107, 108 sind nebeneinander angeordnet und befinden sich auf derselben Höhe bzw. im selben vertikalen Bereich. Zwischen den beiden Drehrädern 102, 104 und oberhalb der durch die beiden Mittelpunkte der Drehräder 102, 104 verlaufenden gedachten horizontalen Geraden ist eine Kalibrationstaste 109 vorgesehen.

Wie bereits vorstehend erwähnt, dienen die Drehräder 102 und 104 dazu, die Betriebsparameter in die Steuereinrichtung 101 einzugeben. Zu diesem Zweck kann die Steuereinheit 112 beispielsweise ausgebildet sein, eine Stellung und/oder eine Stellungsänderung der Drehräder 102, 104 zu erfassen und die erfasste Stellung bzw. Stellungsänderung in einen Wert für einen der Betriebsparameter umzusetzen und abzuspeichern. Die Drehräder 102 und 104 umfassen beispielsweise jeweils einen Drehgeber, beispielsweise einen Inkrementalgeber und/oder einen Absolutwertgeber, der der Steuereinheit 112 ein elektrisches Signal gemäß einer Stellung und/oder Stellungsänderung des jeweiligen Drehrads 102, 104 bereitstellt. Die Steuereinheit 112 ist ausgebildet, für den einzugebenden Betriebsparameter einen Wert gemäß dem empfangenen elektrischen Signal bereitzustellen bzw. intern abzulegen.

Der einzugebende Wert kann auf diese Weise über ein Drehen des zugeordneten Drehrads 102, 104 ausgewählt werden. Gemäß einer bevorzugten Ausgestaltung können die Drehräder 102, 104 als Drehdrücksteller ausgebildet sein. Ein ausgewählter Wert kann dann über Drücken des jeweiligen Drehrads 102, 104 bestätigt werden. Beispielsweise ist die Steuereinheit 112 ausgebildet, bei einem Drücken eines Drehrads 102, 104 den mit diesem Drehrad 102, 104 momentan ausgewählten Wert für den entsprechenden Betriebsparameter zu übernehmen bzw. in einem internen Speicher abzulegen.

In der Steuereinrichtung 101 ist vorzugsweise eine feste Zuordnung zwischen den Drehrädern 102, 104 und den Betriebsparametern definiert. So ist der erste Betriebsparameter fest dem ersten Drehrad 102 zugeordnet, und der zweite Betriebsparameter ist fest dem zweiten Drehrad 104 zugeordnet. Zweckmäßigerweise kann der erste Betriebsparameter mit keinem anderen als dem ersten Drehrad 102 eingegeben werden und der zweite Parameter kann mit keinem anderen als dem zweiten Drehrad 104 eingegeben werden. Eine solche Zuordnung zwischen den Drehrädern 102 und 104 ist beispielsweise in der Steuereinheit 112 konfiguriert. Insbesondere ist die Steuereinrichtung 101 bzw. die Steuereinheit 112 derart konfiguriert, dass es nicht möglich ist, diese feste Zuordnung beispielsweise durch eine Betätigung von Bedienelementen der Bedieneinrichtung 59 zu ändern.

Wie vorstehend bereits erwähnt, verfügt die Bedieneinrichtung 59 exemplarisch über Schnellwahltasten 105, 106, 107 und 108. Die Steuereinrichtung 101 bzw. die Steuereinheit 112 ist ausgebildet, bei Drücken einer der Schnellwahltasten 105, 106, 107 und 108 einen der Betriebsparameter auf einen vorbestimmten Wert zu setzen.

Vorzugsweise ist in der Steuereinrichtung 101 bzw. in der Steuereinheit 112 eine feste Zuordnung zwischen den Schnellwahltasten 105, 106, 107 und 108 und den Betriebsparametern definiert. Beispielsweise sind die Schnellwahltasten 105 und 106 dem ersten Betriebsparameter und die Schnellwahltasten 107 und 108 dem zweiten Betriebsparameter zugeordnet. Zweckmäßigerweise ist die Steuereinheit 112 ausgebildet, eine Betätigung der Schnellwahltasten 105 oder 106 als Eingabe des ersten Betriebsparameters und eine Betätigung der Schnellwahltasten 107 oder 108 als Eingabe des zweiten Betriebsparameters zu erfassen.

Die Bedienelemente der Bedieneinrichtung 59 - also die Drehräder 102, 104 und die Schnellwahltasten 105, 106, 107 und 108 - sind exemplarisch derart angeordnet, dass die demselben Betriebsparameter zugeordneten Bedienelemente gruppiert sind. So befinden sich die dem ersten Betriebsparameter zugeordneten Schnellwahltasten 105 und 106 und das erste Drehrad 102 auf einer ersten Seite einer gedachten vertikalen Trennlinie. Die dem zweiten Betriebsparameter zugeordneten Schnellwahltasten 107 und 108 und das zweite Drehrad 104 befinden sich auf einer zweiten Seite der gedachten vertikalen Trennlinie. Im gezeigten Beispiel befinden sich die Schnellwahltasten 105 und 106 direkt unter dem ersten Drehrad 102 und die Schnellwahltasten 107 und 108 befinden sich direkt unter dem zweiten Drehrad 104.

Wie vorstehend bereits erwähnt, können die Betriebsparameter beispielsweise dazu dienen, die Stellung des Werkzeugs 1 relativ zur Werkstück-Auflageplatte 4 einzustellen. Die Positionierung des Werkzeugs 1 kann in diesem Fall beispielsweise unter Verwendung der elektrischen Stelleinrichtung 103 erfolgen. Die Stelleinrichtung 103 ist insbesondere ausgebildet, das Werkzeug 1 entlang einem ersten und einem zweiten Freiheitsgrad zu positionieren. Über die Betriebsparameter kann die Positionierung entlang der Freiheitsgrade eingestellt werden. Insbesondere ist die Steuereinheit 112 ausgebildet, gemäß den eingegebenen Betriebsparametern eine Ansteuerung der elektrischen Stelleinrichtung 103 durchzuführen, so dass diese das Werkzeug 1 in eine durch die eingegebenen Betriebsparameter definierte Stellung versetzt.

Bei der exemplarisch als Tischkreissäge ausgebildeten transportablen Bearbeitungseinheit 10 entsprechen die beiden Freiheitsgrade beispielsweise der Höhe und dem Gehrungswinkel des Sägeblatts. Zweckmäßigerweise entspricht der erste Freiheitsgrad dabei einer Verschiebung des Werkzeugs 1 in vertikaler Richtung und der zweite Freiheitsgrad einer Verschwenkung des Werkzeugs 1 um eine horizontale Schwenkachse, insbesondere um eine parallel zur y-Achse ausgerichtete Schwenkachse. Mit den Schnellwahltasten 105, 106, 107 und 108 können die Betriebsparameter (im erläuterten Beispiel die Höhe und der Gehrungswinkel) auf besonders häufig verwendete Werte gesetzt werden.

Exemplarisch ist die Steuereinheit 112 ausgebildet, den ersten Betriebsparameter bei Drücken der Schnellwahltaste 105 oder 106 auf einen Wert zu setzten, der einer maximalen oder minimalen Verschiebung in vertikaler Richtung entspricht. Die Steuereinheit 112 ist ferner exemplarisch ausgebildet, den zweiten Betriebsparameter bei Drücken der Schnellwahltasten 107 oder 108 auf einen Wert zu setzten, der einer maximalen oder minimalen Verschwenkung um die horizontale Schwenkachse - also einem maximalen oder minimalen Gehrungswinkel - entspricht.

In der Figur 3 ist eine exemplarische Belegung der Schnellwahltasten 105, 106, 107 und 108 gezeigt. Die Schnellwahltasten 105, 106, 107 und 108 sind exemplarisch mit entsprechenden Markierungen versehen, die als Hinweis für die Tastenbelegung dienen. Die Markierungen können selbstverständlich auch anders ausgestaltet sein oder weggelassen werden. Die Schnellwahltaste 105 ist mit der Markierung "MIN" versehen und mit einem Wert belegt, der einer minimalen Höhe - also der tiefstmöglichen Positionierung in vertikaler Richtung - des Werkzeugs 1 relativ zur Werkstück-Auflageplatte 4 entspricht. Die Schnellwahltaste 106 ist mit der Markierung "MAX" versehen und mit einem Wert belegt, der einer maximalen Höhe - also der höchstmöglichen Positionierung in vertikaler Richtung - des Werkzeugs 1 entspricht. Die Schnellwahltaste 107 ist mit der Markierung "0°" versehen und mit einem Wert belegt, der einem Gehrungswinkel von 0° entspricht. Insbesondere kann der mit der Schnellwahltaste 107 einstellbare Wert einem minimalen oder betragsmäßig minimalen Gehrungswinkel entsprechen. Beispielsweise kann die Tischkreissäge so ausgebildet sein, dass auch negative Gehrungswinkel wie beispielsweise -1° bis -2° Grad einstellbar sind, und mit der Schnellwahltaste 107 lässt sich dann der betragsmäßig minimale Gehrungswinkel - also 0° - einstellen. Die Schnellwahltaste 108 ist mit der Markierung "45°" versehen und mit einem Wert belegt, der einem Gehrungswinkel von 45° entspricht. Dieser Wert kann beispielsweise den maximal einstellbaren Gehrungswinkel darstellen. Selbstverständlich ist es auch möglich, dass ein größerer Gehrungswinkel einstellbar ist und der Wert, mit dem die Schnellwahltaste 108 belegt ist, nicht dem größten sondern stattdessen einem üblichen bzw. häufig verwendetem Gehrungswinkel entspricht.

Im Folgenden werden weitere exemplarische Details der transportablen Bearbeitungseinheit 10 beschrieben.

Die Bedieneinrichtung 59 ist an einer Umfangswand der Stützstruktur 2 angeordnet. Die Drehachsen der Drehräder 102, 104 sind orthogonal zur Umfangswand ausgerichtet. Im gezeigten Beispiel ist die Bedieneinrichtung 59 an der Vorderwand 12 angeordnet.

In der Vorderwand 12 ist eine Vertiefung vorgesehen, in der die Bedieneinrichtung 59 angeordnet ist. Wie in der Figur 1 zu sehen, weist die Vorderwand 12 der Stützstruktur 2 in Längsrichtung zwei seitliche Wandabschnitte 56 und 57 sowie einen mittleren Wandabschnitt 58 auf, der gegenüber den seitlichen Wandabschnitten 56, 57 nach hinten - also in Querrichtung hin zu der Rückwand 13 - versetzt ist, so dass die Vorderwand 12 in Längsrichtung mittig eine Vertiefung aufweist. Im gezeigten Beispiel erstreckt sich die Vertiefung über den gesamten Vertikalbereich der Vorderwand 12 von der Unterseite der Stützstruktur 2 bis zur Oberseite - also über das Unterteil 3 und das Oberteil 16. An dem mittleren Wandabschnitt 58 ist die Bedieneinrichtung 59 vorgesehen. Die Bedieneinrichtung 59 ist an dem Unterteil 3 angeordnet. Die Bedieneinrichtung 59 ist insbesondere derart dimensioniert, dass sie in Querrichtung nicht über die seitlichen Wandabschnitte 56, 57 hinausragt.

Wie vorstehend bereits erwähnt, umfasst die Bedieneinrichtung 59 exemplarisch eine Anzeige 111. Die Anzeige 111 ist ausgebildet, den ersten und/oder den zweiten Stellungsparameter anzuzeigen. Exemplarisch ist die Anzeige 111 oberhalb der Drehräder 102, 104 an der Vorderwand 12 der Stützstruktur 2 angeordnet und gegenüber der Vorderwand 12 nach oben angewinkelt.

Die transportable Bearbeitungseinheit 10 verfügt zweckmäßigerweise über einen Einschaltknopf 61 und einen Ausschaltknopf 62. Wie z.B. in der Figur 3 zu sehen, können der Einschaltknopf 61 und der Ausschaltknopf 62 an der Vorderwand 12 angeordnet sein. Der Einschaltknopf 61 dient vorzugsweise dazu, den Antrieb des Werkzeugs 1 durch die Antriebseinrichtung 5 zu starten und der Ausschaltknopf 62 dient vorzugsweise dazu, den Antrieb des Werkzeugs 1 durch die Antriebseinrichtung 5 zu stoppen. Vorzugsweise sind der Einschaltknopf 61 und der Ausschaltknopf 62 mit der Steuereinheit 112 verbunden. Der Einschaltknopf 61 und/oder Ausschaltknopf 62 ist vorzugsweise zusätzlich zu den Drehrädern 102, 104 vorgesehen.

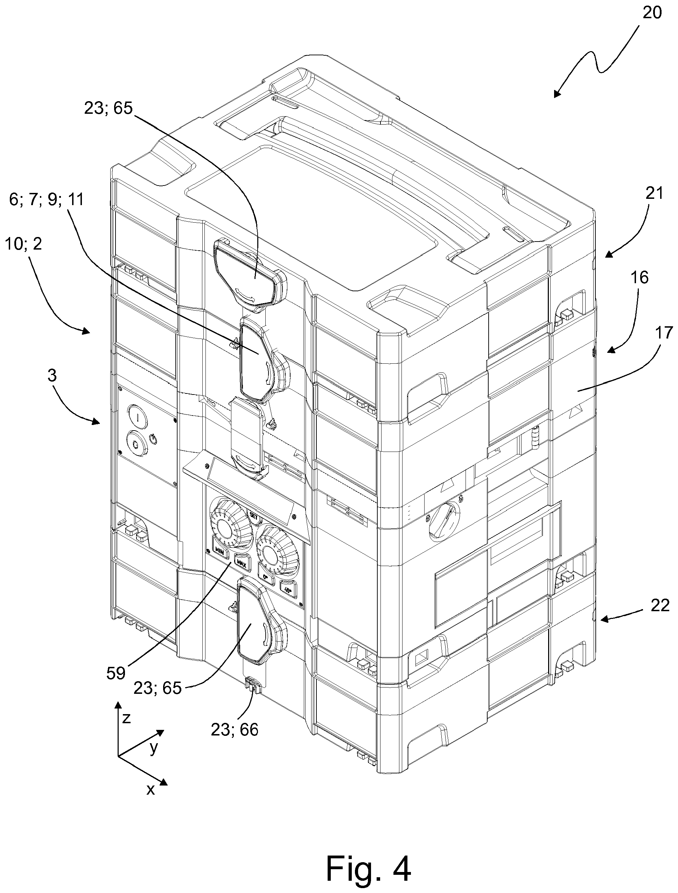

Wie vorstehend diskutiert, weist die Stützstruktur 2 exemplarisch ein Oberteil 16 auf. Das Oberteil 16 kann abnehmbar an dem Unterteil 3 angebracht werden. Die Figur 4 zeigt die Bearbeitungseinheit 10 in einem Zustand, in dem das Oberteil 16 auf das Unterteil 3 aufgesetzt und an dieses angekoppelt ist. In der Figur 1 ist die transportable Bearbeitungseinheit 10 in einem Zustand gezeigt, in dem das Oberteil 16 von dem Unterteil 3 abgenommen ist.

Zur Kopplung des Oberteils 16 an das Unterteil 3 sind exemplarisch Oberteil-Kopplungsmittel 28 und Unterteil-Kopplungsmittel 29 vorgesehen. Insbesondere kann mittels der Oberteil-Kopplungsmittel 28 und der Unterteil-Kopplungsmittel 29 eine vertikal zugfeste Kopplung zwischen dem Unterteil 3 und dem Oberteil 16 bereitgestellt werden. Zweckmäßigerweise umfassen die Oberteil-Kopplungsmittel 28 einen Drehriegel 31 und die Unterteil-Kopplungsmittel 29 eine Verriegelungsankerkontur 39. Vorzugsweise sind die Oberteil-Kopplungsmittel 28 und die Unterteil-Kopplungsmittel 29 zumindest teilweise in der Vertiefung in der Vorderwand 12 angeordnet. Insbesondere sind der Drehriegel 31 und die Verriegelungsankerkontur 28 in der Vertiefung bzw. an dem mittleren Wandabschnitt 58 angeordnet.

In dem gezeigten Ausführungsbeispiel verfügt die Stützstruktur 2 exemplarisch über Stützstruktur-Kopplungsmittel 6. Die Stützstruktur-Kopplungsmittel 6 sind dazu geeignet, in einem Zustand, in dem die Stützstruktur 2 zusammen mit wenigstens einem kastenförmigen Körper 21, 22 einen vertikalen Stapel 20 bildet, eine lösbare, vertikal zugfeste Kopplung mit dem wenigstens einen kastenförmigen Körper 21, 22 bereitzustellen, wie dies in der Figur 4 gezeigt ist.

Die transportable Bearbeitungseinheit 10 kann mit Hilfe der Stützstruktur-Kopplungsmittel 6 stabil in einem Stapel aus kastenförmigen Körpern 21, 22, wie beispielsweise kastenförmigen Behältern und/oder weiteren transportablen Bearbeitungseinheiten 10 untergebracht werden. Wie in den Figuren zu sehen ist, weist die transportable Bearbeitungseinheit 10 exemplarisch die Grundgestalt einer Systemkiste auf. Die in den Figuren gezeigte transportable Bearbeitungseinheit 10 ist ausgebildet, in einem Stapel von weiteren Systemkisten untergebracht zu werden.

Die Grundgestalt der transportablen Bearbeitungseinheit 10 wird insbesondere durch die kastenförmige Stützstruktur 2 definiert. Vorzugsweise stellen die Außenflächen der Stützstruktur 2 das Gehäuse bzw. die äußeren Gehäuseflächen der transportablen Bearbeitungseinheit 10 dar. Das Gehäuse bzw. die Grundgestalt der transportablen Bearbeitungseinheit 10 weist insbesondere die Form einer Systemkiste auf. Systemkisten eines Systems verfügen über eine in dem System definierte Grundfläche und weisen in dem System definierte Kopplungsmittel auf, so dass Systemkisten eines Systems zu einem stabilen Stapel zusammengesetzt werden können. Systemkisten sind beispielsweise als modulare Werkzeugkästen zur Aufbewahrung von handgeführtem Elektrowerkzeug, Zubehör und/oder Verbrauchmaterialen weit verbreitet. Ist die Grundgestalt bzw. das Gehäuse der erfindungsgemäßen Bearbeitungseinheit 10 in der Form einer Systemkiste ausgebildet, so kann die transportable Bearbeitungseinheit 10 in praktischer Weise in einem Stapel aus Systemkisten verstaut und transportiert werden.

Die Stützstruktur-Kopplungsmittel 6 umfassen exemplarisch obere Stützstruktur-Kopplungsmittel 7, die an dem Oberteil 16 vorgesehen sind. Die oberen Stützstruktur-Kopplungsmittel 7 sind dazu geeignet, in einem Zustand, in dem ein kastenförmiger Körper 21 auf die transportable Bearbeitungseinheit 10 gestapelt ist, eine lösbare, vertikal zugfeste Kopplung mit dem kastenförmigen Körper 21 bereitzustellen. Die oberen Stützstruktur-Kopplungsmittel 7 umfassen ein beweglich gelagertes Verriegelungselement 9. Im gezeigten Beispiel umfasst das Verriegelungselement 9 einen an der Stützstruktur 2 drehbar gelagerten Drehriegel 11. Der Drehriegel 11 ist an der Vorderwand 12 der Stützstruktur 2 angeordnet. Die Drehachse des Drehriegels 11 verläuft orthogonal zu der Vorderwand 12.

Die Stützstruktur-Kopplungsmittel 6 umfassen ferner untere Stützstruktur-Kopplungsmittel 8, die an dem Unterteil 3 vorgesehen sind. Die unteren Stützstruktur-Kopplungsmittel 8 sind dazu geeignet, in einem Zustand, in dem die transportable Bearbeitungseinheit 10 auf einen kastenförmigen Körper 22 gestapelt ist, eine lösbare, vertikal zugefeste Kopplung mit dem kastenförmigen Körper 22 bereitzustellen. Die unteren Stützstruktur-Kopplungsmittel 8 umfassen wenigstens eine an der Stützstruktur 2 ortsfest angeordnete erste Verriegelungsankerkontur 14. Im gezeigten Beispiel ist die erste Verriegelungsankerkontur 14 am Unterteil der Stützstruktur 2 angeordnet. Die erste Verriegelungsankerkontur 14 befindet sich an der Vorderwand 12 der Stützstruktur und ist in Bezug auf die Längsrichtung mittig an der Stützstruktur 2 angeordnet. Die erste Verriegelungsankerkontur 14 ist als Verriegelungsvorsprung ausgebildet und steht von der Vorderwand 12 ab.

Das Verriegelungselement 9 und die erste Verriegelungsankerkontur 14 sind derart angeordnet, dass bei zwei vertikal übereinander gestapelten transportablen Bearbeitungseinheiten 10 das Verriegelungselement 9 der einen transportablen Bearbeitungseinheit in Kopplungseingriff mit der ersten Verriegelungsankerkontur 14 der anderen Bearbeitungseinheit gebracht werden kann.

Die Figur 4 zeigt einen Stapel 20, der die vorstehend diskutierte transportable Bearbeitungseinheit 10, einen oberen kastenförmigen Körper 21, der auf der transportablen Bearbeitungseinheit 10 angeordnet ist, sowie einen unteren kastenförmigen Körper 22, der unter der transportablen Bearbeitungseinheit 10 angeordnet ist, umfasst. Die beiden kastenförmigen Körper 21, 22 sind in der Figur 4 exemplarisch als kastenförmige Behälter ausgebildet. Alternativ dazu kann auch jeder der kastenförmigen Körper 21, 22 als eine weitere Bearbeitungseinheit 10 ausgeführt sein.

Die beiden kastenförmigen Körper 21, 22 bilden zusammen mit der transportablen Bearbeitungseinheit 10 den vertikalen Stapel 20. Die kastenförmigen Körper 21, 22 weisen Körper-Kopplungsmittel 23 auf, die mit den Stützstruktur-Kopplungsmitteln 6 zusammenwirken, um eine lösbare, vertikal zugefeste Kopplung zwischen den kastenförmigen Körpern 21, 22 und der transportablen Bearbeitungseinheit 10 bereitzustellen.

Der horizontale Querschnitt der transportablen Bearbeitungseinheit 10 weist im Wesentlichen die gleiche Außenkontur wie der horizontale Querschnitt der kastenförmigen Körper 21, 22 auf. Die transportable Bearbeitungseinheit 10 ist fluchtend zu den kastenförmigen Körpern 21, 22 angeordnet, so dass die transportable Bearbeitungseinheit 10 und die kastenförmigen Körper 21, 22 zusammen einen im Wesentlichen quaderförmigen Stapel 20 bilden.

Die Körper-Kopplungsmittel 23 können identisch zu den Stützstruktur-Kopplungsmitteln 6 ausgebildet sein. Die Kopplung zwischen den Körper-Kopplungsmitteln 23 und den Stützstruktur-Kopplungsmitteln 6 kann dann in gleicher Weise erfolgen wie die vorstehend beschriebene Kopplung zwischen Stützstruktur-Kopplungsmitteln 6 zweier transportabler Bearbeitungseinheiten 10.

Insbesondere umfassen die Körper-Kopplungsmittel 23 ein vorzugsweise als Drehriegel ausgebildetes Verriegelungselement 65 und eine Verriegelungsankerkontur 66.

Die vorstehend diskutierten Verriegelungselemente 11, 31 sowie die Verriegelungsankerkonturen 14 und 39 sind vorzugsweise an dem mittleren Wandabschnitt 58 vorgesehen. Die Verriegelungselemente 11, 31 sowie die Verriegelungsankerkonturen 14 und 39 sind folglich in der selben Vertiefung an der Vorderwand 12 vorgesehen, an der die Bedieneinrichtung 59 bzw. deren Bedienelemente angebracht sind.

## Patentansprüche

1. Transportable Bearbeitungseinheit (10), insbesondere Tischkreissäge, mit einem Werkzeug (1) zur Bearbeitung eines Werkstücks, umfassend eine auf einer Unterlage abstellbare kastenförmige Stützstruktur (2), die über eine zum Auflegen des zu bearbeitenden Werkstücks nutzbare Werkstück-Auflageplatte (4) verfügt, sowie eine Steuereinrichtung (101) mit einer als Mikrocontroller ausgebildeten Steuereinheit (12) und einer außen an der Stützstruktur (2) angeordneten Bedieneinrichtung (59), die an die Steuereinheit (12) angeschlossen ist, wobei die Bedieneinrichtung (59) ein erstes Drehrad (102) und ein zweites Drehrad (104) umfasst, wobei über das erste Drehrad (102) ein mit einem Betrieb des Werkzeugs (1) in Verbindung stehender erster Betriebsparameter in die Steuereinrichtung (101) eingebbar ist und über das zweite Drehrad (104) ein mit dem Betrieb des Werkzeugs (1) in Verbindung stehender zweiter Betriebsparameter in die Steuereinrichtung (101) eingebbar ist, wobei die Drehräder (102, 104) jeweils einen Drehgeber umfassen, der der Steuereinheit (112) ein elektrisches Signal gemäß einer Stellung und/oder einer Stellungsänderung des jeweiligen Drehrads (102, 104) bereitstellt, **dadurch gekennzeichnet, dass** die Bedieneinrichtung (59) über mehrere Schnellwahltasten (105, 106, 107, 108) verfügt, wobei in der Steuereinrichtung (101) jeweils eine feste Zuordnung zwischen den Schnellwahltasten (105, 106, 107, 108) und den Betriebsparametern definiert ist.

2. Transportable Bearbeitungseinheit (10) nach Anspruch 1, **dadurch gekennzeichnet, dass** in der Steuereinrichtung (101) eine feste Zuordnung zwischen den Drehrädern (102, 104) und den Betriebsparametern definiert ist.

3. Transportable Bearbeitungseinheit (10) nach einem der voranstehenden Ansprüche, **dadurch gekennzeichnet, dass** die Steuereinrichtung (101) ausgebildet ist, bei Drücken einer der Schnellwahltasten (105, 106, 107, 108) den ersten oder zweiten Betriebsparameter auf einen vorbestimmten Wert zu setzen

4. Transportable Bearbeitungseinheit (10) nach einem der voranstehenden Ansprüche, wobei die Schnellwahltasten (105, 106, 107, 108) dem ersten Betriebsparameter zugeordnete Schnellwahltasten (105, 106) umfassen und die Steuereinheit (12) ausgebildet ist, eine Betätigung der dem ersten Betriebsparameter zugeordneten Schnellwahltasten als Eingabe des ersten Betriebsparameters zu erfassen, und wobei die Schnellwahltasten (105, 106, 107, 108) dem zweiten Betriebsparameter zugeordnete Schnellwahltasten (106, 107) umfassen und die Steuereinheit (12) ausgebildet ist, eine Betätigung der dem zweiten Betriebsparameter zugeordneten Schnellwahltasten als Eingabe des zweiten Betriebsparameters zu erfassen.

5. Transportable Bearbeitungseinheit (10) nach einem der voranstehenden Ansprüche, **dadurch gekennzeichnet, dass** die Drehräder (102, 104) und die Schnellwahltasten (105, 106, 107, 108) derart angeordnet sind, dass sich die dem ersten Betriebsparameter zugeordneten Schnellwahltasten (105, 106) und das erste Drehrad (102) auf einer ersten Seite einer gedachten Trennlinie befinden und sich die dem zweiten Betriebsparameter zugeordneten Schnellwahltasten (107, 108) und das zweite Drehrad (104) auf einer zweiten Seite der gedachten Trennlinie befinden.

6. Transportable Bearbeitungseinheit (10) nach einem der voranstehenden Ansprüche, **dadurch gekennzeichnet, dass** die Steuereinrichtung (101) eine elektrische Stelleinrichtung (103) umfasst und ausgebildet ist, unter Verwendung der elektrischen Stelleinrichtung (103) die Stellung des Werkzeugs (1) relativ zur Werkstück-Auflageplatte (4) gemäß dem ersten und/oder zweiten Betriebsparameter einzustellen.

7. Transportable Bearbeitungseinheit (10) nach Anspruch 6, **dadurch gekennzeichnet, dass** die elektrische Stelleinrichtung (103) ausgebildet ist, das Werkzeug (1) entlang einem ersten und einem zweiten Freiheitsgrad zu positionieren, und die Steuereinrichtung (103) ausgebildet ist, unter Verwendung der elektrischen Stelleinrichtung (103) die Stellung des Werkzeugs (1) entlang dem ersten Freiheitsgrad gemäß dem ersten Betriebsparameter einzustellen und die Stellung des Werkzeugs (1) entlang dem zweiten Freiheitsgrad gemäß dem zweiten Betriebsparameter einzustellen.

8. Transportable Bearbeitungseinheit (10) nach Anspruch 6 oder 7, **dadurch gekennzeichnet, dass** die elektrische Stelleinrichtung (103) ausgebildet ist, das Werkzeug (1) entlang einer vertikalen Translationsachse zu verschieben und/oder um eine horizontale Schwenkachse zu verschwenken.

9. Transportable Bearbeitungseinheit (10) nach Anspruch 8, **dadurch gekennzeichnet, dass** die Steuereinrichtung (101) ausgebildet ist, den ersten und/oder zweiten Betriebsparameter bei Drücken einer der Schnellwahltasten (105, 106, 107, 108) auf einen Wert zu setzten, der einer maximalen oder minimalen Verschiebung entlang der vertikalen Translationsachse oder einer maximalen oder minimalen Verschwenkung um die horizontale Schwenkachse entspricht.

10. Transportable Bearbeitungseinheit (10) nach einem der voranstehenden Ansprüche, **dadurch gekennzeichnet, dass** die Bedieneinrichtung (59) an einer Umfangswand der Stützstruktur (2) angeordnet ist und die Drehachsen der Drehräder (102, 104) orthogonal zur Umfangswand ausgerichtet sind.

11. Transportable Bearbeitungseinheit (10) nach Anspruch 10, **dadurch gekennzeichnet, dass** in der Umfangswand eine Vertiefung vorgesehen ist, in der die Bedieneinrichtung (59) angeordnet ist.

12. Transportable Bearbeitungseinheit (10) nach Anspruch 11, **dadurch gekennzeichnet, dass** die Stützstruktur (2) Kopplungsmittel (6) aufweist und ausgebildet ist, in einem Zustand, in dem die transportable Bearbeitungseinheit (10) zusammen mit wenigstens einem kastenförmigen Körper (21; 22) einen vertikalen Stapel (20) bildet, eine lösbare, vertikal zugfeste Kopplung mit dem wenigstens einen kastenförmigen Körper (21; 22) bereitzustellen, wobei die Kopplungsmittel (6) zumindest teilweise in der Vertiefung angeordnet sind.

13. Transportable Bearbeitungseinheit (10) nach einem der voranstehenden Ansprüche, **dadurch gekennzeichnet, dass** die Bedieneinrichtung (59) eine Anzeige (111) umfasst, die ausgebildet ist, den ersten und/oder den zweiten Stellungsparameter anzuzeigen.

14. Transportable Bearbeitungseinheit (10) nach Anspruch 13, **dadurch gekennzeichnet, dass** die Anzeige (111) oberhalb der Drehräder (102, 104) an einer Umfangswand der Stützstruktur (2) angeordnet ist und gegenüber der Umfangswand nach oben angewinkelt ist.

15. Transportable Bearbeitungseinheit (10) nach einem der voranstehenden Ansprüche, **dadurch gekennzeichnet, dass** eines der Drehräder, vorzugsweise jedes der Drehräder, einen Inkrementalgeber umfasst.

## Claims

1. Transportable machining unit (10), in particular a circular table saw, with a tool (1) for machining a workpiece, comprising a box-shaped support structure (2) which can be placed on a support and which has a workpiece support plate (4) which can be used to support the workpiece to be machined, as well as a control device (101) having a control unit designed as a microcontroller and an operating device (59) arranged on the outside of the support structure (2), the operating device (59) being connected to the control unit (12), wherein the operating device (59) comprises a first rotary wheel (102) and a second rotary wheel (104), wherein a first operating parameter associated with an operation of the tool (1) can be entered into the control device (101) via the first rotary wheel (102) and a second operating parameter associated with the operation of the tool (1) can be entered into the control device (101) via the second rotary wheel (104), wherein the rotary wheels (102, 104) each comprise a rotary encoder, which provide an electrical signal to the control unit (112) in accordance with a position and/or change in position of the respective rotary wheel (102, 104), **characterized in that** the operating device (59) has multiple quick selection buttons (105, 106, 107, 108), wherein, in the control device (101) a respective fixed assignment between the quick selection buttons (105, 106, 107, 108) and the operating parameters is defined.

2. Transportable machining unit (10) according to Claim 1, **characterised in that** a fixed assignment between the rotary wheels (102, 104) and the operating parameters is defined in the control device (101).

3. Transportable machining unit (10) according to any one of the preceding claims, **characterised in that** the control device (101) is configured to set the first and/or second operating parameter to a pre-determined value when one of the quick selection buttons (105, 106, 107, 108) is pressed.

4. Transportable machining unit (10) according to any one of the preceding claims, wherein the quick selection buttons (105, 106, 107, 108) comprise quick selection buttons (105, 106) assigned to the first operating parameter and the control unit (12) is configured to detect an actuation of the quick selection buttons (105, 106) assigned to the first operating parameter as input of the first operating parameter, and wherein the quick selection buttons (105, 106, 107, 108) comprise quick selection buttons (106, 107) assigned to the second operating parameter and the control unit (12) is configured to detect an actuation of the quick selection buttons assigned to the second operating parameter as input of the second operating parameter.

5. Transportable machining unit (10) according to any one of the preceding claims, **characterised in that** the rotary wheels (102, 104) and the quick selection buttons (105, 106, 107, 108) are arranged such that the quick selection buttons (105, 106) assigned to the first operating parameter and the first rotary wheel (102) are located on a first side of an imaginary dividing line and the quick selection buttons (107, 108) assigned to the second operating parameter and the second rotary wheel (104) are located on a second side of the imaginary dividing line.

6. Transportable machining unit (10) according to any one of the preceding claims, **characterised in that** the control device (101) comprises an electrical adjusting device (103) and is adapted to adjust the position of the tool (1) relative to the workpiece support plate (4) according to the first and/or second operating parameter using the electrical adjusting device (103).

7. Transportable machining unit (10) according to Claim 6, **characterised in that** the electrical adjusting device (103) is adapted to position the tool (1) along first and second degrees of freedom, and the control device (103) is adapted, using the electrical adjusting device (103), to adjust the position of the tool (1) along the first degree of freedom in accordance with the first operating parameter and to adjust the position of the tool (1) along the second degree of freedom in accordance with the second operating parameter.

8. Transportable machining unit (10) according to Claim 6 or 7, **characterised in that** the electrical adjusting device (103) is configured to displace the tool (1) along a vertical translation axis and/or to pivot it about a horizontal pivot axis.

9. Transportable machining unit (10) according to Claim 8, **characterised in that** the control device (101) is configured to set the first and/or second operating parameter to a value which corresponds to a maximum and/or minimum displacement along the vertical translation axis and/or a maximum and/or minimum pivoting about the horizontal pivot axis when one of the quick selection buttons (105, 106, 107, 108) is pressed.

10. Transportable machining unit (10) according to any one of the preceding claims, **characterised in that** the operating device (59) is arranged on a circumferential wall of the support structure (2) and the axes of rotation of the rotary wheels (102, 104) are aligned orthogonally to the circumferential wall.

11. Transportable machining unit (10) according to Claim 11, **characterised in that** a recess is provided in the circumferential wall in which the operating device (59) is arranged.

12. Transportable machining unit (10) according to Claim 11, **characterised in that** the support structure (2) comprises coupling means (6) and is adapted to provide, in a state in which the transportable machining unit (10) together with at least one box-shaped body (21; 22) forms a vertical stack (20), a releasable, vertically tension-proof coupling with the at least one box-shaped body (21; 22), wherein the coupling means (6) are at least partially arranged in the recess.

13. Transportable machining unit (10) according to any one of the preceding claims, **characterised in that** the operating device (59) comprises a display (111) which is designed to display the first and/or the second position parameter.

14. Transportable machining unit (10) according to Claim 13, **characterised in that** the display (111) is arranged above the rotary wheels (102, 104) on a circumferential wall of the support structure (2) and is angled upwards relative to the circumferential wall.

15. Transportable machining unit (10) according to any one of the preceding claims, **characterised in that** one of the rotary wheels, preferably each of the rotary wheels, comprises an incremental encoder.

## Revendications

1. Unité d'usinage (10) transportable, en particulier scie circulaire à table, avec un outil (1) pour l'usinage d'une pièce à usiner, comprenant une structure d'appui (2) en forme de caisson, pouvant être placée sur un support qui dispose d'une plaque d'appui de pièce (4) utilisable pour le placement de la pièce à usiner, ainsi qu'un dispositif de commande (101) avec une unité de commande (12) réalisée en tant que microcontrôleur et un dispositif de manoeuvre (59) agencé à l'extérieur au niveau de la structure d'appui (2) qui est raccordé à l'unité de commande (12), dans laquelle le dispositif de manoeuvre (59) comporte une première roue de rotation (102) et une deuxième roue de rotation (104), dans laquelle un premier paramètre de fonctionnement se trouvant en liaison avec un fonctionnement de l'outil (1) peut être saisi par le biais de la première roue de rotation (102) dans le dispositif de commande (101) et un deuxième paramètre de fonctionnement se trouvant en liaison avec le fonctionnement de l'outil (1) peut être saisi par le biais de la deuxième roue de rotation (104) dans le dispositif de commande (101), dans laquelle les roues de rotation (102, 104) comportent respectivement un encodeur qui fournit à l'unité de commande (112) un signal électrique selon une position et/ou modification de position de la roue de rotation (102, 104) respective, **caractérisée en ce que** le dispositif de manoeuvre (59) dispose de plusieurs touches à choix rapide (105, 106, 107, 108), dans laquelle respectivement une association fixe est définie entre les touches à choix rapide (105, 106, 107, 108) et les paramètres de fonctionnement dans le dispositif de commande (101).

2. Unité d'usinage (10) transportable selon la revendication 1, **caractérisée en ce qu'**une association fixe entre les roues de rotation (102, 104) et les paramètres de fonctionnement est définie dans le dispositif de commande (101).

3. Unité d'usinage (10) transportable selon l'une quelconque des revendications précédentes, **caractérisée en ce que** le dispositif de commande (101) est réalisé afin de placer lors de la pression d'une des touches à choix rapide (105, 106, 107, 108) le premier ou deuxième paramètre de fonctionnement à une valeur prédéterminée.

4. Unité d'usinage (10) transportable selon l'une quelconque des revendications précédentes, dans laquelle les touches à choix rapide (105, 106, 107, 108) comportent des touches à choix rapide (105, 106) associées au premier paramètre de fonctionnement et l'unité de commande (12) est réalisée afin de détecter un actionnement des touches à choix rapide associées au premier paramètre de fonctionnement en tant que saisie du premier paramètre de fonctionnement, et dans laquelle les touches à choix rapide (105, 106, 107, 108) comportent des touches à choix rapide (106, 107) associées au deuxième paramètre de fonctionnement et l'unité de commande (12) est réalisée afin de détecter un actionnement des touches à choix rapide associées au deuxième paramètre de fonctionnement en tant que saisie du deuxième paramètre de fonctionnement.

5. Unité d'usinage (10) transportable selon l'une quelconque des revendications précédentes, **caractérisée en ce que** les roues de rotation (102, 104) et les touches à choix rapide (105, 106, 107, 108) sont agencées de telle manière que les touches à choix rapide (105, 106) associées au premier paramètre de fonctionnement et la première roue de rotation (102) se trouvent sur un premier côté d'une ligne de séparation imaginaire et les touches à choix rapide (107, 108) associées au deuxième paramètre de fonctionnement et la deuxième roue de rotation (104) se trouvent sur un deuxième côté de la ligne de séparation imaginaire.

6. Unité d'usinage (10) transportable selon l'une quelconque des revendications précédentes, **caractérisée en ce que** le dispositif de commande (101) comporte un dispositif de réglage (103) électrique et est réalisé afin de régler en utilisant le dispositif de réglage (103) électrique la position de l'outil (1) par rapport à la plaque d'appui de pièce (4) selon le premier et/ou deuxième paramètre de fonctionnement.

7. Unité d'usinage (10) transportable selon la revendication 6, **caractérisée en ce que** le dispositif de réglage (103) électrique est réalisé afin de positionner l'outil (1) le long d'un premier et d'un deuxième degré de liberté, et le dispositif de commande (103) est réalisé afin de régler en utilisant le dispositif de réglage (103) électrique la position de l'outil (1) le long du premier degré de liberté selon le premier paramètre de fonctionnement et de régler la position de l'outil (1) le long du deuxième degré de liberté selon le deuxième paramètre de fonctionnement.

8. Unité d'usinage (10) transportable selon la revendication 6 ou 7, **caractérisée en ce que** le dispositif de réglage (103) électrique est réalisé afin de déplacer l'outil (1) le long d'un axe de translation vertical et/ou de pivoter autour d'un axe de pivotement horizontal.

9. Unité d'usinage (10) transportable selon la revendication 8, **caractérisée en ce que** le dispositif de commande (101) est réalisé afin de placer le premier et/ou deuxième paramètre de fonctionnement lors du pressage d'une des touches à choix rapide (105, 106, 107, 108) à une valeur qui correspond à un déplacement maximal ou minimal le long de l'axe de translation vertical ou à un pivotement maximal ou minimal autour de l'axe de pivotement horizontal.

10. Unité d'usinage (10) transportable selon l'une quelconque des revendications précédentes, **caractérisée en ce que** le dispositif de manoeuvre (59) est agencé au niveau d'une paroi périphérique de la structure d'appui (2) et les axes de rotation des roues de rotation (102, 104) sont orientés orthogonalement à la paroi périphérique.

11. Unité d'usinage (10) transportable selon la revendication 10, **caractérisée en ce qu'**une cavité est prévue dans la paroi périphérique, dans laquelle le dispositif de manoeuvre (59) est agencé.

12. Unité d'usinage (10) transportable selon la revendication 11, **caractérisée en ce que** la structure d'appui (2) présente des moyens de couplage (6) et est réalisée afin de fournir dans un état, dans lequel l'unité d'usinage (10) transportable forme conjointement avec au moins un corps (21 ; 22) en forme de caisson une pile verticale (20), un couplage amovible, résistant à la traction verticalement avec l'au moins un corps (21 ; 22) en forme de caisson, dans laquelle les moyens de couplage (6) sont agencés au moins partiellement dans la cavité.

13. Unité d'usinage (10) transportable selon l'une quelconque des revendications précédentes, **caractérisée en ce que** le dispositif de manoeuvre (59) comporte un affichage (111) qui est réalisé afin d'afficher le premier et/ou le deuxième paramètre de position.

14. Unité d'usinage (10) transportable selon la revendication 13, **caractérisée en ce que** l'affichage (111) est agencé au-dessus des roues de rotation (102, 104) au niveau d'une paroi périphérique de la structure d'appui (2) et est coudé par rapport à la paroi périphérique vers le haut.

15. Unité d'usinage (10) transportable selon l'une quelconque des revendications précédentes, **caractérisée en ce qu'**une des roues de rotation, de préférence chacune des roues de rotation, comporte un encodeur incrémental.
